# DEMANDE DE BREVET EUROPEEN

(11) **EP 0 657 245 A1**
(43) Date de publication de la demande: **14.06.1995**
(21) Numéro de dépôt: 94810699.2
(22) Date de dépôt: 06.12.1994
(51) Int. Cl.: B23Q 17/09

(54) **Dispositif pour la détection de casse ou présence d'outil au moyen de jet liquide**

(30) Priorité: 07.12.1993 CH 3634/93
(71) Demandeur: Audemars, Paul-André, CH-2400 Locle (CH)
(72) Inventeur: Audemars, Paul-André, CH-2400 Locle (CH)

(57) **Abrégé**

Ce dispositif à contrôler la casse ou la présence d'outils dans des conditions d'usinage avec des liquides de coupe,au moyen de l'interruption ou non d'un jet de liquide est composé d'un double piston pour créer une pression de liquide, d'une buse pour assurer un jet de liquide,d'un capteur piézoélectrique qui fourni un signal si le jet frappe le capteur,dans le cas ou le jet de liquide est interrompu le capteur ne fournira pas de signal.Ce signal peut être utilisé pour stopper la machine si il y a casse d'outil en cours d'usinage.

## Description

L'usinage de pièces sur machine automatique nécessite un contrôle de la casse ou la présence de l'outil, car un outil défectueux a plusieurs conséquences, les pièces produitent seront pour le rebut ou une pièce défectueuse poluera le lot de bonnes pièces ce qui entraîne un contrôle de tout le lot.

La présente invention a pour but de détecter la casse ou la présence de l'outil dans une ambiance poluée par des projections de liquide de coupe ou des copeaux.Cette détection est obtenue par l'interruption d'un jet de liquide dont l'outil fait obstacle, par contre si l'outil est cassé ou non présent le jet de liquide n'est pas interrompu, et celui-ci peut être détecté.

L'invention est définie dans les revendications.

Les dessins représentent,à titre d'exemple,une forme d'exécution de l'invention.

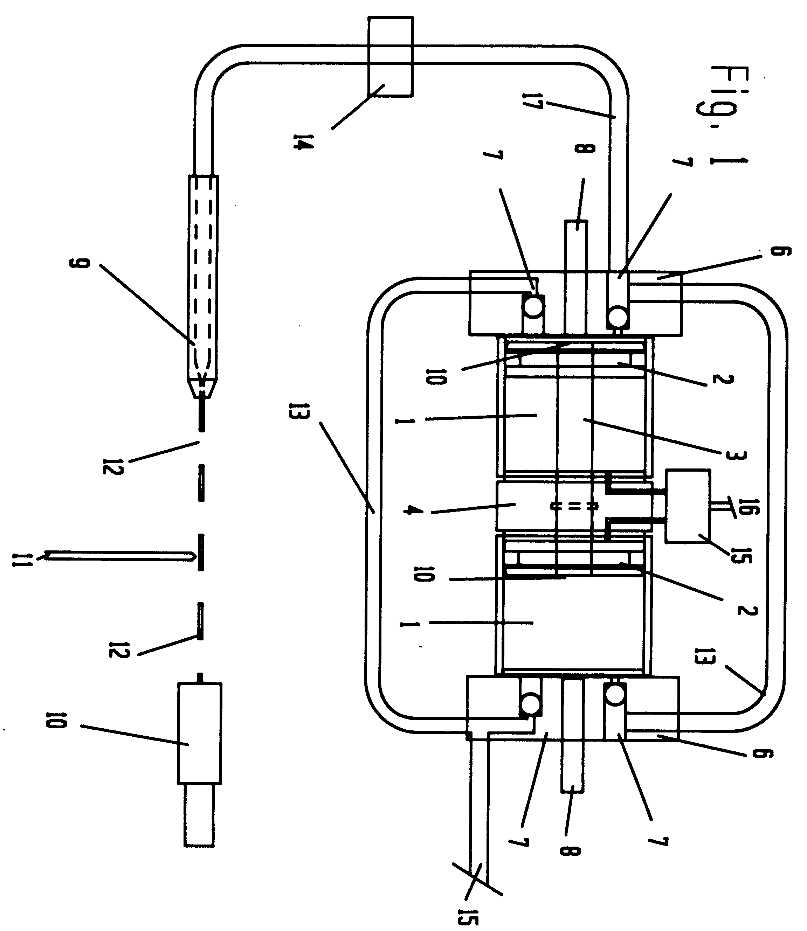

La figure 1 est une vue schématique des éléments essentiels d'un appareil selon l'invention.

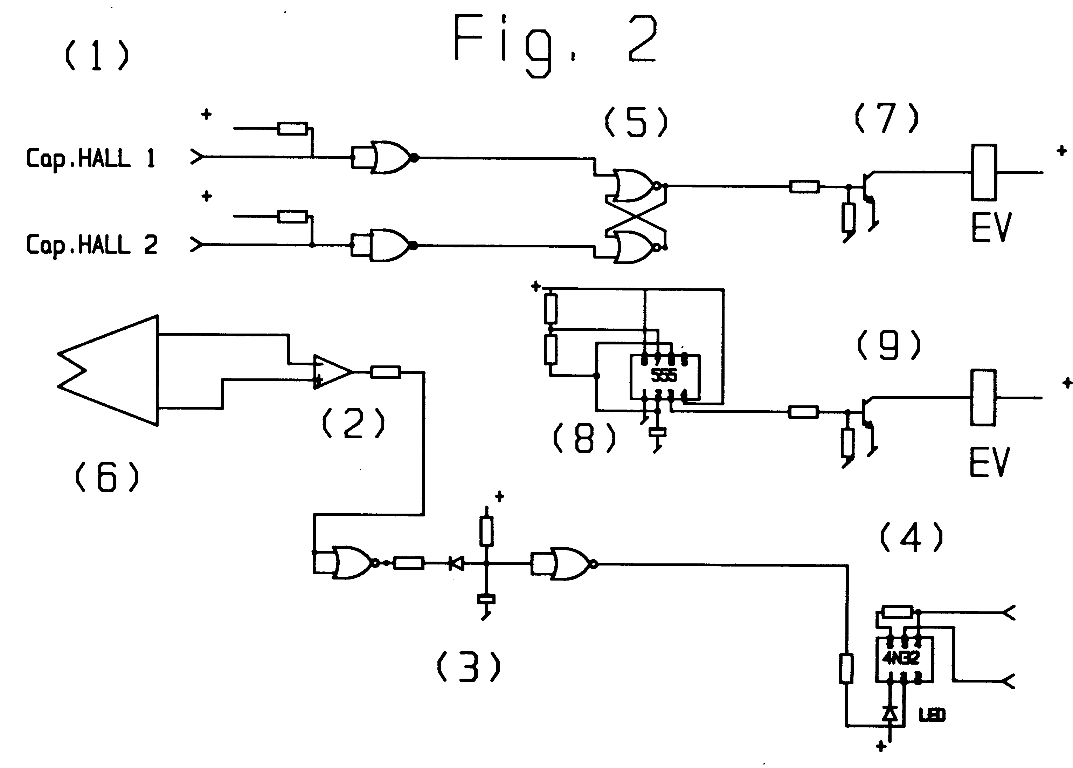

L'appareil est constitué de quatre éléments bien distinct soit un double piston (2) pour créer une pression suffisante pour obtenir un jet de liquide par l'intermédiaire d'une buse (9) dont le jet vient frapper un capteur(10) dont la fonction est de transformer la présence ou non du jet de liquide en signal électrique,ce signal sera analysé par un circuit électronique (fig.2) dont le signal de sortie sera exploitable pour la commande d'une machine.Le double piston(fig.1) est constitué de deux chambres séparées (1) dont les deux pistons (2) sont solidaires par l'intermédiaire d'une tige (3),la séparation des deux chambres est assurée par une flasque intermédiaire (4) celle-ci assure la distribution de la pression de l'air dans chaque chambre en provenance de l'électrovalve à cinq voies (15),l'air comprimé alimente l'électrovalve(15) par l'entrée (16),les deux flasques extérieures (6) dont chacune possède deux valves (7),celles-ci ont pour fonction de séparer l'aspiration du liquide et de son refoulement.Les deux flasques (6) sont reliées extérieurement (13) entre elles ce qui a pour effet d'avoir toujours du liquide sous pression au travers de la buse (9),ce malgrés l'inversion du double piston (1).La commande d'inversion est assurée par un capteur à effet Hall (8) dans chaque flasque (6), ainsi qu'un aimant (10) sur chaque extrémité du double piston.La sortie (17) est reliée à une electrovalve (14) qui a pour fonction d'interrompre et de laisser passer la pression alternativement plusieurs fois par secondes,de ce fait nous avons un jet de liquide (12) fractionné, ce qui provoque une difference de pression sur le capteur (10) à chaque fraction du jet de liquide(12) de plus du fait que la fréquence est contrôlée par un oscillateur électronique qui commande l'électrovalve (14), un circuit électronique discriminateur analyse si le signal du capteur (10) est en phase avec l'oscillateur cette fonction a pour but d'empêcher que des jets parasites engendrent un signal érroné.La buse (9) a pour fonction de créer un jet de liquide concentrique dont le diamètre reste constant sur une distance plus grande que le porte outils,le diamètre de l'orifice de la buse peut varier en fonction de l'outil a détecter il semble qu'un diamètre de 0,6 millimètre donne d'excelents résultats, il n'y a pas de réstriction de diamètre celui-ci dépend surtout de la pression ainsi que la viscosité du liquide.Pour avoir un signal sur le capteur le jet de liquide ne doit pas être interrompu par un objet,dans notre cas si un outil (11) est cassé ou absent le jet pourra atteindre le capteur, dans le cas d'un outil en bon état celui-ci interrompra le jet,dans cette condition le capteur ne donnera pas de signal.Le capteur (10) est composé d'une pastile piézoélectrique qui a la faculté de se déformer sous l'influence d'une pression,soit relative ou absolue cette déformation engendre un signal électrique qui sera amplifié par un amplificateur dont le signal serra utilisable pour activer un comparateur associé à une constante RC pour que le signal de sortie ne soit pas modulé,ce signal activera un opto-coupleur dont la sortie sera isolée galvaniquement pour utilisation sur une commande de machine conjointement une LED indiquera si le signal est activé.Un temporisateur qui est activé à chaque inversion du piston à pour but de s'assurer que la buse n'est pas bouchée ou que le piston ne fonctionne pas,car s'il n'y a pas d'inversion au bout d'un certain laps de temps le temporisateur donnera un signal sur l'optocoupleur ce qui provoquera le même signal que l'outil cassé.Le circuit électronique est constitué d'un amplificateur (2) dont l'entrée est reliée au capteur (1) et la sortie à un optocoupleur (4) par l'intermédiaire d'un circuitRC (3) la sortie de l'optocoupleur (4) est exploitable pour la commande de l'arrêt de la machine.Le Flip-Flop (5) a pour fonction de mémoriser le signal de chaque capteur Hall (6) et de commander par l'intermédiaire du transistor (7) l'électrovalve qui assure la distribution dans chaque chambre pour obtenir un mouvement alternatif du double piston.Le générateur de signal carré (8) assure la commande par l'intermédiaire du transistor (9), l'électrovalve pour la coupure intermittente du jet de liquide.

## Revendications

1. Dispositif de détection caractérisé en ce qu'il comprend au moins une buse apte a diriger un jet liquide,un capteur apte à analyser le jet de liquide,un double piston pour assurer la pression du jet de liquide,un circuit électronique pour analyse,contrôle et commande.

2. Dispositif selon revendication 1,caractérisé en ce qu'il comprend un capteur piézoélectrique qui a pour but de transformer en signal électrique la pression du jet de liquide.

3. Dispositif selon revendication 2,caractérisé par un capteur électro-magnétique,se composant d'une membrane assurant la fermeture d'un circuit magnétique, celui-ci constitué d'un pot en matériaux magnétique et d'une bobine.

4. Dispositif selon revendication 2,caractérisé par un capteur de pression connecté a l'une des extrémitées d'un tuyau et dont l'autre extrémité fait office de récepteur du jet de liquide ce qui a pour effet de séparer le liquide du capteur par l'intermédiaire de l'air emprisonné dans le tuyau.

5. Appareil selon revendication 1,caractérisé en ce que deux pistons en tête bêche assurent le pompage et le refoulement sous pression du liquide.

6. Appareil selon revendication 5,caractérisé en ce que les deux pistons sont actionnés par pression d'air comprimé au travers d'une électrovalve 5/2.

7. Appareil selon revendication 6,caractérisé en ce que l'électrovalve est commandée par un circuit Flip-Flop avec amplificateur associé à deux capteurs à effet Hall disposés à chaque extrémité des chambres.

8. Dispositif selon revendication 1,caractérisé en ce que la buse est alimentée par une pression de liquide intermittente commandée par une électrovalve 2/2.

9. Dispositif selon revendication 2,caractérisé en ce qu'une plaque de faible épaisseur percée d'un trou dont le diamètre permet au jet de liquide de passer,disposée à faible distance du capteur,ceci afin d'obtenir une plus grande sensibilité de détection.

10. Dispositif selon revendication 1,caractérisé en ce que le signal de l'inversion du double piston peut être utilisé pour commuter un temporisateur,si dans un certain laps de temps aucun signal d'inversion n'est intervenu,soit la buse est bouchée ou la pression d'air est insuffisante,dans ce cas le dispositif n'est pas opérationnel.
